Europäisches Patentamt

European Patent Office

Office européen des brevets

(11) Veröffentlichungsnummer: **0 232 764 B1**

# EUROPÄISCHE PATENTSCHRIFT

(45) Veröffentlichungstag der Patentschrift: **16.10.91**

(51) Int. Cl.5: **H02M 1/08**, H02M 3/156

(21) Anmeldenummer: **87100859.5**

(22) Anmeldetag: **22.01.87**

(54) **Schaltungsanordnung zur Steuerung des Längsschaltgliedes eines getakteten Stromversorgungsgeräts.**

(30) Priorität: **14.02.86 DE 3604716**

(43) Veröffentlichungstag der Anmeldung:
**19.08.87 Patentblatt 87/34**

(45) Bekanntmachung des Hinweises auf die Patenterteilung:
**16.10.91 Patentblatt 91/42**

(84) Benannte Vertragsstaaten:
**AT BE CH DE ES FR GB IT LI LU NL SE**

(56) Entgegenhaltungen:
**EP-A- 0 170 944**
**DD-C- 223 586**
**DE-A- 3 323 371**
**DE-B- 2 459 375**
**US-A- 4 410 934**

(73) Patentinhaber: **Siemens Nixdorf Informations-systeme Aktiengesellschaft**
**Fürstenallee 7**
**W-4790 Paderborn(DE)**

(72) Erfinder: **Laue, Hans-Bodo**
**Eggering 60**
**W-4791 Altenbeken(DE)**

(74) Vertreter: **Schaumburg, Thoenes & Englaen-der**
**Mauerkircherstrasse 31 Postfach 86 07 48**
**W-8000 München 86(DE)**

## Beschreibung

Die Erfindung betrifft eine Schaltungsanordnung nach dem Oberbegriff des Patentanspruchs 1.

Die Steuerung des Längsschaltgliedes getakteter Stromversorgungsgeräte erfolgt mit Steuerimpulsen, deren Impuls-Pausen-Verhältnis zu einer möglichst konstanten ausgangsseitig abgegebenen Gleichspannung führen soll. Hierzu wird ein der Ausgangsspannung entsprechendes Stellsignal abgeleitet und einem Pulslängenmodulator zugeführt, um das Impuls-Pausen-Verhältnis der Steuerimpulse so zu regeln, daß die Ausgangsgleichspannung unabhängig von Belastungsänderungen weitgehend konstant bleibt. Dabei ist eine galvanische Entkopplung des Stellsignals erforderlich, um die Potentialtrennung zwischen dem Ausgangs- und dem Steuerstromkreis zu gewährleisten. In getakteten Stromversorgungsgeräten verwendet man dazu Optokoppler, da mit ihnen eine galvanisch getrennte Übertragung von Gleichspannungssignalen möglich ist. Eine nach vorstehendem Prinzip arbeitende Schaltungsanordnung ist aus der DD-PS 223 586 bekannt und benötigt keinen besonderen Pulslängenmodulator zur Veränderung des Impuls-Pausen-Verhältnisses der Steuerimpulse, da sie im wesentlichen als Schmitt-Trigger aufgebaut ist, der durch das Stellsignal direkt beeinflußt wird. In besonderen Betriebsfällen wie Starten und Stillsetzen des Stromversorgungsgeräts müssen aber zusätzliche Steuerfunktionen bereitgestellt werden, die z.B. das "weiche" Anlaufen oder das langsame Entladen der Eingangskapazität des Stromversorgungsgeräts gewährleisten und die Steuerschaltung durch ihre Rückwirkungen entsprechend beeinflussen. Dadurch wird der Aufbau von Steuerschaltungen der vorstehend beschriebenen Art aber kompliziert.

Bei getakteten Stromversorgungsgeräten ist die das Längsschaltglied steuernde Schaltung vorwiegend kapazitiv belastet und sollte deshalb an ihrem Ausgang im Interesse einer möglichen hohen Grenzfrequenz und möglichst geringer Leistungsaufnahme insbesondere die Ladevorgänge der kapazitiven Last möglichst nicht verzögern.

Es ist nun Aufgabe der Erfindung, eine Schaltungsanordnung zur Steuerung des Längsregelgliedes getakteter Stromversorgungsgeräte anzugeben, die bei größtmöglicher Einfachheit eine zuverlässige und rückwirkungsfreie Steuerung gewährleistet und sich insbesondere zum Einsatz für Geräte eignet, in denen sie vorwiegend kapazitiv belastet wird.

Diese Aufgabe wird durch die Merkmale des Patentanspruchs 1 gelöst. Vorteilhafte Weiterbildungen sind in den Unteransprüchen angegeben.

Bei der Erfindung wird eine Leistungsverstärkung erreicht, bei der eine dem Leistungsverstärker nachgeschaltete kapazitive Last in den Impulspausen, in denen der Verstärkertransistor gesperrt ist, über die Diode und den Ausgang der Oszillatorschaltung praktisch unverzögert entladen werden kann, wodurch die Grenzfrequenz der Oszillatorschaltung bei kapazitiver Last nicht beeinträchtigt wird. Die beiden Rückkopplungszweige unterscheiden sich in ihrem Ausgangspunkt. Der mit dem Optokoppler versehene Rückkopplungszweig führt vom Schaltungsausgang zu dem einen Eingang des Operationsverstärkers, während der andere Rückkopplungszweig direkt mit dem Ausgang des Operationsverstärkers verbunden ist. Durch diese Maßnahme wird erreicht, daß Störungen, die z.B. durch Ausschwingvorgänge der Speicherdrosseln im Stromversorgungsgerät der Ausgangsspannung der Oszillatorschaltung überlagert sein können, keine Rückwirkung auf die Oszillatorschaltung selbst haben, da sie durch den nachgeschalteten Leistungsverstärker von deren Ausgang ferngehalten werden. Solche Rückwirkungen könnten andernfalls den stabilen Betrieb der Oszillatorschaltung stören, da sie über den genannten Rückkopplungszweig an einem Eingang des Operationsverstärkers wirksam würden. Der andere Rückkopplungszweig, der mit dem Optokoppler beschaltet ist, ist zwar an den Ausgang des Leistungsverstärkers angeschlossen, jedoch können die der Ausgangsspannung gegebenenfalls überlagerten Störungen an dem anderen Eingang des Operationsverstärkers nicht wirksam werden, weil sie durch den ohmschen Widerstand dieses Rückkopplungszweigs und die dort angeschaltete Kapazität als RC-Glied gefiltert werden.

Es sind Optokoppler mit Fototransistoren verfügbar, die eine ausgeprägte Sperreigenschaft im Inversbetrieb haben. Dies bedeutet, daß bei Anwendung in Verbindung mit der Erfindung eine saubere Trennung des Lade- und Entladevorgangs der mit dem ersten Rückkopplungszweig verbundenen Kapazität möglich ist. Wie noch beschrieben wird, kann dadurch eine Regelung der Impulslängen oder Impulspausen des Ausgangssignals der Oszillatorschaltung erzielt werden, bei der gleichzeitige Auswirkungen auf die jeweils andere Größe, also auf die Impulspausen bzw. die Impulslängen, ausgeschlossen sind.

Vorteilhaft wird als Operationsverstärker ein Spannungskomparator verwendet. Dieser bietet gegenüber dem üblichen Operationsverstärker den Vorteil einer günstigeren Schaltleistungsaufnahme mit steigender Betriebsfrequenz, also des besseren Wirkungsgrades insbesondere bei hoher Frequenz.

Die Ein- bzw. Ausschaltung der Oszillatorschaltung ist prinzipiell dadurch möglich, daß einer der beiden Eingänge des Operationsverstärkers wahlweise mit dem Bezugspotential verbunden wird. Dies kann in weiterer Ausbildung des Erfindungsgedankens vorteilhaft dadurch verwirklicht werden, daß ein Eingang des Operationsverstärkers mit einem Open-Collector-Ausgang einer Start-Stop-Schaltstufe verbunden ist. Diese Schaltstufe hat dann die Funktion, abhängig von einem ihr zugeführten Schaltbefehl den mit ihr verbundenen Eingang des Operationsverstärkers entweder mit Bezugspotential zu verbinden oder nicht. Diese Eigenschaft wird durch den Open-Collector-Ausgang der Schaltstufe ideal erfüllt.

Eine besonders einfache Lösung des letztgenannten Prinzips ist dadurch gegeben, daß als Start-Stop-Schaltstufe ein zweiter Spannungskomparator vorgesehen ist, dessen einer Eingang mit einer Referenzspannung beschaltet ist und dessen anderem Eingang als Vergleichseingang ein Start-Stop-Spannungssignal zuführbar ist. Die Verwendung des zweiten Spannungskomparators bietet den besonderen Vorteil, daß er zusammen mit dem ersten Spannungskomparator als eine einheitliche integrierte Schaltung ausgebildet sein kann, so daß beide in einem gemeinsamen Gehäuse als einheitliches Bauelement eine Oszillatorschaltung mit Start-Stop-Schaltstufe darstellen. Bei dem zweiten Spannungskomparator kann das Start-Stop-Spannungssignal abhängig von seiner Amplitude die Oszillatorschaltung in Betrieb setzen oder ausschalten, denn der zweite Spannungskomparator gibt abhängig davon sein Ausgangssignal ab, ob das Spannungssignal an seinem Vergleichseingang die Referenzspannung überschreitet oder unterschreitet. Das Ausgangssignal des Spannungskomparators ergibt sich dann dadurch, daß sein Open-Collector-Ausgang entweder leitend oder offen gesteuert wird.

Das Start-Stop-Spannungssignal wird vorteilhaft über ein RC-Verzögerungsglied zugeführt. Dadurch kann erreicht werden, daß die Oszillatorschaltung erst nach einer vorbestimmten Verzögerungszeit gestartet wird. Dies ist beispielsweise bei Anwendung der Oszillatorschaltung in getakteten Stromversorgungsgeräten von Bedeutung, die "weich" anlaufen sollen, bei denen also der Eingangskondensator des Stromversorgungsgerätes sich auf einen so hohen Spannungswert aufladen kann, bevor die Oszillatorschaltung einschaltet, daß die Kondensatorspannung infolge der Leistungsentnahme aus dem Kondensator nicht mehr unter den Ausschaltpunkt der Start-Stop-Schaltstufe absinken kann.

Der zweite Spannungskomparator kann mit einer Mitkopplung zum Vergleichseingang hin versehen sein. Dadurch wird eine Schalthysterese erreicht.

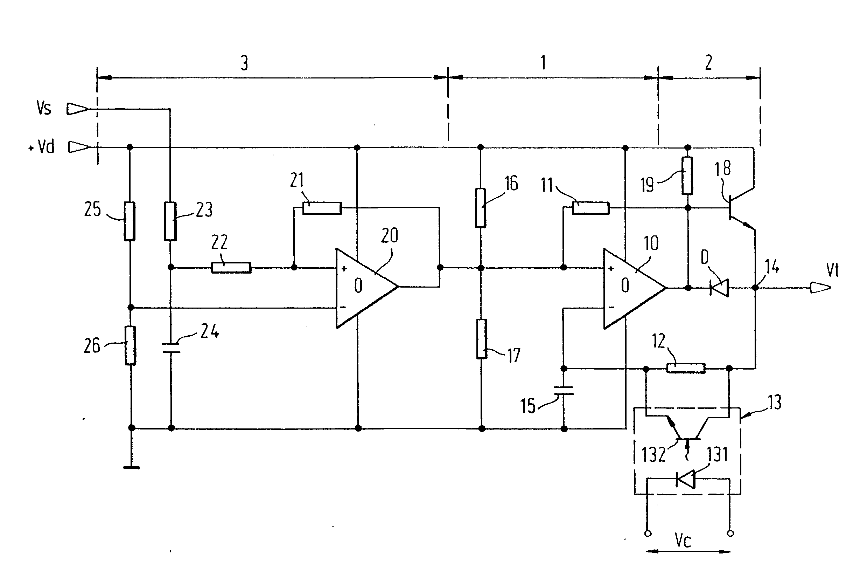

Die Erfindung wird im folgenden an Hand eines in der Figur dargestellten Ausführungsbeispiels weiter erläutert.

Die in der Figur gezeigte Schaltungsanordnung enthält eine Oszillatorschaltung 1, einen ihr nachgeschalteten Leistungsverstärker 2 und eine Start-Stop-Schaltstufe 3.

Zunächst wird die Oszillatorschaltung 1 selbst erläutert. Diese enthält einen Spannungskomparator 10 mit einem invertierenden und einem nicht invertierenden Eingang und zwei mit diesen Eingängen verbundenen Rückkopplungszweigen. Der eine Rückkopplungszweig ist durch einen ohmschen Widerstand 11 gebildet, der mit dem nicht invertierenden Eingang und dem Ausgang des Spannungskomparators 10 verbunden ist. Der andere Rückkopplungszweig ist durch einen ohmschen Widerstand 12 und die diesem parallelgeschaltete Kollektor-Emitterstrecke eines Optokopplers 13 gebildet und führt vom Ausgang 14 der Schaltungsanordnung zum invertierenden Eingang des Spannungskomparators 10. Dieser invertierende Eingang ist außerdem über einen Kondensator 15 mit Massepotential verbunden.

Der nicht invertierende Eingang des Spannungskomparators 10 ist mit dem Abgriff eines Spannungsteilers aus Widerständen 16 und 17 verbunden. Dieser Spannungsteiler liegt, wie auch die übrige Oszillatorschaltung 1, an dem positiven Betriebsspannungspotential der Betriebsspannung Vd sowie an Massepotential.

Der Spannungskomparator 10 hat einen Open-Collector-Ausgang, der in an sich bekannter Weise auf Massepotential oder hochohmig gesteuert werden kann, was von den Schaltkriterien an den Eingängen des Spannungskomparators 10 abhängt. Die Art der Schwingungserzeugung mit dieser Schaltung muß nicht näher erläutert werden, da sie nicht unmittelbar zur Erfindung gehört. Die Oszillatorschaltung 1 gibt an ihrem Ausgang Rechteckimpulse ab, deren Impuls-Pausen-Verhältnis dadurch geändert werden kann, daß der Eingangsdiode 131 des Optokopplers 13 eine analoge Steuerspannung Vc als Stellgröße zugeführt wird, die in noch zu beschreibender Weise eine Widerstandsänderung des Fototransistors 132 des Optokopplers 13 hervorruft.

Dem Spannungskomparator 10 ist der Leistungsverstärker 2 mit einem Verstärkertransistor 18 nachgeschaltet, der als Emitterfolger betrieben wird, so daß sein Emitter den Schaltungsausgang 14 bildet. Dieser ist über eine Diode D mit dem Ausgang des Spannungskomparators 10 verbunden, der seinerseits die Basis des Verstärkertransistors 18 steuert. Ein Widerstand 19 liegt zwischen dem positiven Betriebsspannungspotential Vd und der Basis des Verstärkertransistors 18 bzw. dem Ausgang des Spannungskomparators 10.

Als Start-Stop-Schaltstufe ist ein weiterer Spannungskomparator 20 mit Open-Collector-Ausgang vorgesehen, der zum nicht invertierenden Eingang hin mit einem Widerstand 21 mitgekoppelt ist. Diesem Eingang wird über einen Widerstand 22 ein Start-Stop-Spannungssignal Vs zugeführt, welches zuvor mit einem aus einem Widerstand 23 und einem Kondensator 24 bestehenden RC-Glied verzögert wird. Der invertierende Eingang des Spannungskomparators 20 erhält eine Referenzspannung, die durch Spannungsteilung mit zwei Widerständen 25 und 26 gebildet wird, welche in Reihe an die Betriebsspannung Vd angeschaltet sind.

Im folgenden wird die Arbeitsweise der in der Figur dargestellten Schaltung erläutert, wobei zunächst der stationäre Betriebszustand der Oszillatorschaltung 1 vorausgesetzt und der Einfluß des Optokopplers 13 auf das Impuls-Pausen-Verhältnis des Ausgangssignals der Oszillatorschaltung 1 erläutert wird.

Der Widerstand 12 in dem einen Rückkopplungszweig des Spannungskomparators 10 ist eines der die Betriebsfrequenz der Oszillatorschaltung 1 bestimmenden Elemente. Ihm ist der Fototransistor 132 des Optokopplers 13 parallelgeschaltet, dessen Eingangsdiode 131 die Steuerspannung Vc zugeführt wird. Hat diese den Wert 0, so fließt kein Strom durch die Eingangsdiode 131, und der Fototransistor 132 ist gesperrt. In diesem Zustand wird die Betriebsfrequenz der Oszillatorschaltung 1 nur durch die Widerstände 11, 12, 16, 17 und 19 in Zusammenwirken mit dem Kondensator 15 bestimmt, wobei das Impuls-Pausen-Verhältnis durch das Verhältnis der Widerstände 16 und 17 zueinander bestimmt ist, so daß durch die Werte dieser beiden Widerstände 16 und 17 eine Grundeinstellung des Impuls-Pausen-Verhältnisses vorgenommen werden kann.

Erscheint nun eine Steuerspannung Vc an der Eingangsdiode 131 des Optokopplers 13, die eine solche Richtung hat, daß durch die Eingangsdiode 131 ein Strom in Durchlaßrichtung fließt, so wird der Fototransistor 132 des Optokopplers 13 auf einen der Steuerspannung Vc proportionalen Leitwert gesteuert. Es sei nun vorausgesetzt, daß ein solcher Optokoppler 13 verwendet wird, bei dem der Fototransistor 132 ausgeprägte Sperreigenschaften im Inversbetrieb hat. Dies bewirkt dann, daß der Fototransistor 132 nur dann leitend wird, wenn sein Kollektor positiv gegenüber seinem Emitter ist. Im anderen Falle, also im Inversbetrieb, ist der Fototransistor 132 gesperrt, obwohl auch dann eine in Durchlaßrichtung gepolte Steuerspannung Vc an der Eingangsdiode 131 anliegen kann.

Wenn der Fototransistor 132 leitend gesteuert ist, so wird der Kondensator 15 am invertierenden Eingang des Spannungskomparators 10 über die Parallelschaltung des Widerstandes 12 und des Fototransistors 132 aufgeladen, wenn am Ausgang des Spannungskomparators 10 ein Signal erscheint, welches am Schaltungsausgang 14, also nach Verstärkung mit dem Verstärkertransistor 18, den Zustand H erzeugt. Hat dieses Signal am Schaltungsausgang 14 hingegen den Zustand L, so wird der Kondensator 15 praktisch nur über den Widerstand 12, nicht aber über den Fototransistor 132 entladen, da dessen Innenwiderstand voraussetzungsgemäß im Inversbetrieb sehr groß im Verhältnis zum Widerstand 12 sein soll.

Die Zeit, für die am Schaltungsausgang 14 jeweils der Zustand H vorliegt, ist die Impulslänge des von der Schaltung abgegebenen impulsförmigen Signals Vt und kann analog dem Verlauf der Steuerspannung Vc variiert werden. Die Zeit des Zustandes L, also die Pausenlänge des impulsförmigen Signals Vt, bleibt dagegen unbeeinflußt.

Die Diode D bildet einen Entladestromweg für eine an den Schaltungsausgang 14 angeschaltete kapazitive Last bei gesperrtem Verstärkertransistor 18. Die Entladung der kapazitiven Last erfolgt dabei über die Diode D und den Open-Collector-Ausgang des Spannungskomparators 10, wenn dieser Ausgang mit Massepotential verbunden ist. Der Emitter des Transistors 18 erhält dabei gegenüber der Basis eine positive Vorspannung in Höhe der Restspannung der Diode D, so daß der Transistor 18 zuverlässig und schnell sperrt.

Anstelle der Impulslänge kann auch die Impulspause des impulsförmigen Ausgangssignals Vt gesteuert werden. Hierzu ist der Fototransistor 132 umzupolen, so daß nicht sein Kollektor, sondern sein Emitter mit dem Schaltungsausgang 14 verbunden ist. Dies wird aus der vorhergehenden Erläuterung ohne weiteres verständlich.

Es ist darauf hinzuweisen, daß die Impulslänge bzw. die Pausenlänge des impulsförmigen Signals Vt jeweils als stetige Funktion der Steuerspannung Vc gesteuert wird, so daß also eine Stromänderung in Durchlaßrichtung der Eingangsdiode 131 des Optokopplers 13 eine umgekehrt proportionale zeitliche Änderung im Ausgangssignal Vt zur Folge hat. Mit zunehmender Stromstärke wird also die jeweils gesteuerte Zeit kürzer.

Die Oszillatorschaltung mit nachgeschaltetem Leistungsverstärker ist hinsichtlich der beiden Rückkopplungszweige unterschiedlich ausgebildet. Der Rückkopplungswiderstand 11 ist direkt an den Ausgang des Spannungskomparators 10 angeschlossen, während der Rückkopplungswiderstand 12 an den Schaltungsausgang 14 angeschlossen ist. Der direkte Anschluß des Widerstands 11 an den Ausgang des Spannungskomparators 10 hat den Vorteil, daß Störungen, die dem Ausgangssignal Vt überlagert werden, was bei Betrieb der Schaltung in einem getakteten Stromversorgungsgerät der Fall sein kann, bei Rückwirkung auf den Schaltungsausgang 14 über den Rückkopplungswiderstand 11 nicht auf den entsprechenden Eingang des Spannungskomparators 10 übergeleitet werden. Solche Störungen könnten nämlich die Umschaltschwelle des Spannungskomparators 10 verfälschen, die an sich durch die Widerstände 11, 16 und 17 am nicht invertierenden Eingang des Spannungskomparators 10 festgelegt ist.

Eine Auswirkung überlagerter Störungen am invertierenden Eingang des Spannungskomparators 10 ist nicht zu befürchten, da die Störungen trotz der Anschaltung des Widerstandes 12 an den Schaltungsausgang 14 durch das mit dem Widerstand 12 und dem Kondensator 15 gebildete RC-Glied ausgefiltert werden.

Ebenso wie der Widerstand 11 könnte auch der Widerstand 12 direkt an den Ausgang des Spannungskomparators 10 angeschaltet sein, wenn dies im Hinblick auf eine vorgegebene Leistungsaufnahme der Oszillatorschaltung zulässig ist.

Der zweite Spannungskomparator 20 erfüllt die Funktion, den nicht invertierenden Eingang des Spannungskomparators 10, also des aktiven Elements der Oszillatorschaltung, gegebenenfalls mit Massepotential zu verbinden. Eine solche Verbindung unterbricht den Schwingungszustand der Oszillatorschaltung, so daß das Ausgangssignal Vt den Zustand L erhält. Würde der invertierende Eingang des Spannungskomparators 10 mit Massepotential verbunden, so würde gleichfalls der Schwingungszustand unterbrochen, das Ausgangssignal Vt jedoch den Zustand H annehmen. Um nur eine solche Verbindung mit Massepotential herzustellen, würde auch ein Schalttransistor mit niedriger Sättigungsspannung verwendbar sein. Bei der in der Figur dargestellten Schaltung wird jedoch der Open-Collector-Ausgang des zweiten Spannungskomparators 20 verwendet, der zusammen mit dem ersten Spannungskomparator 10 in einem gemeinsamen Gehäuse als einheitliche integrierte Schaltung vorgesehen sein kann und die im folgenden beschriebene Funktion ausführt.

Der zweite Spannungskomparator 20 erhält an seinem invertierenden Eingang eine Referenzspannung, die durch den Spannungsteiler mit den Widerständen 25 und 26 aus der Betriebsspannung Vd abgeleitet wird. Wenn am nicht invertierenden Eingang des Spannungskomparators 20 eine Spannung erscheint, die diese Referenzspannung überschreitet, so ist der Ausgang des Spannungskomparators 20 "offen". Wird die Referenzspannung am invertierenden Eingang des Spannungskomparators 20 durch die Spannung am nicht invertierenden Eingang hingegen unterschritten, so schaltet der Open-Collector-Ausgang des Spannungskomparators 20 leitend und verbindet den nicht invertierenden Eingang des Spannungskomparators 10 mit Massepotential, so daß der Schwingungszustand der Oszillatorschaltung unterbrochen wird und am Schaltungsausgang 14 der Zustand L erscheint. Die das Ein- und Ausschalten des Schwingungszustandes bewirkende Spannung am nicht invertierenden Eingang des Spannungskomparators 20 wird als steuernde Schaltspannung Vs über einen Widerstand 22 zugeführt, nachdem sie zuvor durch das RC-Glied mit dem Widerstand 23 und dem Kondensator 24 verzögert wurde.

Soll die Oszillatorschaltung aus dem Stopzustand in den Schwingungszustand gesteuert werden, so muß der Spannungskomparator 20 entsprechend in den Startzustand übergehen. Dies bedeutet, daß sein Ausgang von dem leitenden in den offenen Zustand umgeschaltet werden muß, wozu die Schaltspannung Vs die Referenzspannung am invertierenden Eingang des Spannungskomparators 20 überschreiten muß. Ist dies der Fall, so entsteht beim Übergang des Spannungskomparators 20 in den offenen Zustand ein positiver Spannungssprung am Ausgang des Spannungskomparators 20, der dadurch hervorgerufen wird, daß der Schwingungszustand der Oszillatorschaltung beginnt und über den Rückkopplungswiderstand 11 dann ein entsprechendes Signal am nicht invertierenden Eingang des Spannungskomparators 10 auftritt. Eine damit verbundene Verlagerung der mit den Widerständen 11, 12 bzw. 25, 26 vorgegebenen Umschaltschwellen an den nicht invertierenden Eingängen der Spannungskomparatoren 10 und 20 bewirkt eine Hysterese bei der Start-Stop-Umschaltung der Gesamtschaltung.

Die mit dem RC-Glied aus Widerstand 23 und Kondensator 24 bewirkte Verzögerung des mit dem Schaltsignal Vs hervorgerufenen Umschaltevorgangs im Spannungskomparator 20 erfüllt eine Anforderung, die beim Einsatz der in der Figur gezeigten Schaltungsanordnung in einem getakteten Stromversorgungsgerät gestellt wird, welches einen "weichen" Anlauf haben soll.

Der Spannungskomparator 20 kann auch so beschaltet werden, daß nicht ein Überschreiten, sondern ein Unterschreiten der Referenzspannung das Einschalten der Oszillatorschaltung zur Folge hat. Dies kann beispielsweise durch Vertauschen der Beschaltungen an den Eingängen des Spannungskomparators 20 geschehen.

**Patentansprüche**

1.  Schaltungsanordnung zur Steuerung des Längsschaltgliedes eines getakteten Stromversorgungsgeräts mit einem Impulssignal (Vt), dessen Impuls-Pausen-Verhältnis abhängig von einem ausgangsseitig abgeleiteten und über einen Optokoppler (13) geführten Stellsignal veränderbar ist, mit einer rückgekoppelten Oszillatorschaltung (1), deren Rückkopplungszweig mit einer Kapazität (15) beschaltet ist und einen veränderbaren Widerstand enthält, der durch die Parallelschaltung des Fototransistors (132) des Optokopplers (13) und eines ohmschen Widerstandes (12) gebildet ist, dadurch **gekennzeichnet,** daß der mit einem

Operationsverstärker (10) gebildeten Oszillatorschaltung (1) ein als Emitterfolger geschalteter Verstärkertransistor (18) nachgeschaltet ist, dessen Emitter mit dem Ausgang des Operationsverstärkers (10) über eine bezüglich dessen Ausgangssignal in Sperrichtung gepolte Diode (D) verbunden ist, und daß der den veränderbaren Widerstand (132) enthaltende Rückkopplungszweig vom Emitter des Verstärkertransistors (18) und ein zweiter Rückkopplungszweig (11) vom Ausgang des Operationsverstärkers (10) ausgeht.

2. Schaltungsanordnung nach Anspruch 1, dadurch **gekennzeichnet,** daß ein Optokoppler (13) mit einem Fototransistor (132) mit ausgeprägter Sperreigenschaft im Inversbetrieb vorgesehen ist.

3. Schaltungsanordnung nach Anspruch 1 oder 2, dadurch **gekennzeichnet,** daß ein als Spannungskomparator geschalteter Operationsverstärker (10) vorgesehen ist.

4. Schaltungsanordnung nach Anspruch 3, dadurch **gekennzeichnet,** daß der Operationsverstärker (10) einen Open-Collector-Ausgang hat.

5. Schaltungsanordnung nach einem der vorhergehenden Ansprüche, dadurch **gekennzeichnet,** daß ein Eingang des Operationsverstärkers (10) mit einem Open-Collector-Ausgang einer Start-Stop-Schaltstufe (20) verbunden ist.

6. Schaltungsanordnung nach Anspruch 5, dadurch **gekennzeichnet,** daß als Start-Stop-Schaltstufe (3) ein zweiter Spannungskomparator (20) vorgesehen ist, dessen einer Eingang mit einer Referenzspannung beschaltet ist und dessen anderem Eingang als Vergleichseingang ein Start-Stop-Spannungssignal (Vs) zuführbar ist.

7. Schaltungsanordnung nach Anspruch 6, dadurch **gekennzeichnet,** daß der zweite Spannungskomparator (20) einen Open-Collector-Ausgang hat.

8. Schaltungsanordnung nach Anspruch 6 oder 7, dadurch **gekennzeichnet,** daß das Start-Stop-Spannungssignal (Vs) über ein RC-Verzögerungsglied (23,24) zugeführt wird.

9. Schaltungsanordnung nach Anspruch 6, 7 oder 8, dadurch **gekennzeichnet,** daß der zweite Spannungskomparator (20) mit einer Mitkopplung (21) zum Vergleichseingang versehen ist.

10. Schaltungsanordnung nach einem der Ansprüche 6 bis 9, dadurch **gekennzeichnet,** daß die beiden Spannungskomparatoren (10, 20) als eine einheitliche integrierte Schaltung ausgebildet sind.

**Claims**

1. Circuit arrangement for controlling the series switching element of a clocked power supply by means of a pulse signal (Vt) whose pulse-interval ratio can be varied as a function of a regulating signal derived from the output side of said power supply unit and conducted over an optoisolator (13), having a feedback oscillator circuit (1) whose feedback branch is provided with a capacitance (15) and contains a variable resistance comprised of a parallel connection of the phototransistor (132) of the optoisolator (13) with an ohmic resistor (12), **characterized** in that said oscillator circuit (1) comprising an operational amplifier (10) is connected to an amplifying transistor (18), operating as emitter-follower, whose emitter is connected to the output of the operational amplifier (10) via a diode (D) being back biased relative to the output signal of said operational amplifier, and that
said feedback branch containing the variable resistance (132) is derived from the emitter of the amplifying transistor (18), and that
a second feedback branch (11) is derived from the output of the operational amplifier (10).

2. Circuit arrangement according to claim 1, **characterized** in that an optoisolator (13) is provided, comprising a phototransistor (132) with a distinctive cut-off characteristic in its inverse operation.

3. Circuit arrangement according to claim 1 or 2, **characterized** in that an operational amplifier (10) operating as a voltage comparator is provided.

4. Circuit arrangement according to claim 3, **characterized** in that said operational amplifier (10) has an open collector output.

5. Circuit arrangement according to any one of the foregoing claims, **characterized** in that one input of the operational amplifier (10) is connected with an open collector output of a start-stop switching unit (20).

6. Circuit arrangement according to claim 5, **characterized** in that a second voltage comparator (20) is provided as a start-stop switching unit (3), one input of which is fed with a reference voltage whereas the other input, functioning as a comparison input, is adapted to receive a start-stop voltage signal (Vs).

7. Circuit arrangement according to claim 6, **characterized** in that the second voltage comparator (20) has an open collector output.

8. Circuit arrangement according to claim 6 or 7, **characterized** in that the start-stop voltage signal (Vs) is delivered via an RC-delay element (23, 24).

9. Circuit arrangement according to the claims 6, 7 and 8, **characterized** in that the second voltage comparator (20) is provided with a regenerative feedback path (21) to the comparison input.

10. Circuit arrangement according to any one of the claims 6 to 9, **characterized** in that the two voltage comparators (10, 20) are arranged as a single integrated circuit.

**Revendications**

1. Circuit de commande de l'élément de commutation série d'un appareil d'alimentation cyclique en courant à impulsions (Vt) dont le taux impulsion-intervalle est modifiable en fonction d'un signal réglant dérivé de la sortie et passant par un optron (13), circuit comprenant un montage oscillateur (1) à réaction, dont la branche de réaction est équipée d'une capacité (15) et comprend une résistance variable formée du montage en parallèle du phototransistor (132) de l'optron (13) et d'une résistance ohmique (12), caractérisé en ce qu'un transistor amplificateur (18) monté en émettodyne est monté en aval du montage oscillateur (1) formé au moyen d'un amplificateur opérationnel (10), l'émetteur dudit transistor (18) étant connecté à la sortie de l'amplificateur opérationnel (10) par l'intermédiaire d'une diode (D) polarisée en sens inverse par rapport au signal de sortie de ce dernier, et en ce que la branche de réaction comprenant la résistance variable (132) part de l'émetteur du transistor amplificateur (18) et une seconde branche de réaction (11) part de la sortie de l'amplificateur opérationnel (10).

2. Circuit selon la revendication 1, caractérisé en ce que l'optron prévu (13) comprend un phototransistor (132) à caractéristique nette de blocage en mode d'opération inverse.

3. Circuit selon la revendication 1 ou 2, caractérisé en ce que l'amplificateur opérationnel prévu (10) est monté en comparateur de tension.

4. Circuit selon la revendication 3, caractérisé en ce que l'amplificateur opérationnel (10) a une sortie à collecteur ouvert.

5. Circuit selon l'une des revendications précédentes, caractérisé en ce qu'une entrée de l'amplificateur opérationnel (10) est connectée à une sortie à collecteur ouvert d'un étage de commutation start-stop (20).

6. Circuit selon la revendication 5, caractérisé en ce que l'étage de commutation start-stop (3) prévu est un second comparateur de tension (20) dont une entrée reçoit une tension de référence et sur l'autre entrée duquel, qui forme une entrée de comparaison, un signal en tension start-stop (Vs) peut être dirigé.

7. Circuit selon la revendication 6, caractérisé en ce que le second comparateur de tension (20) a une sortie à collecteur ouvert.

8. Circuit selon la revendication 6 ou 7, caractérisé en ce que le signal en tension start-stop (Vs) est dirigé par l'intermédiaire d'un élément de temporisation RC (23, 24).

9. Circuit selon la revendication 6, 7 ou 8, caractérisé en ce que le second comparateur de tension (20) est muni d'une contre-réaction positive (21) par rapport à l'entrée de comparaison.

10. Circuit selon l'une des revendications 6 à 9, caractérisé en ce que les deux comparateurs de tension (10, 20) sont conformés en circuit intégré unitaire.